Europäisches Patentamt

European Patent Office

Office européen des brevets

(19)

(11) Publication number: **0 055 237**
**A2**

# EUROPEAN PATENT APPLICATION

(21) Application number: **81850247.8**

(22) Date of filing: **17.12.81**

(51) Int. Cl.³: **B 29 H 5/04**

(30) Priority: **17.12.80 SE 8008884**

(43) Date of publication of application: **30.06.82**
**Bulletin 82/26**

(84) Designated Contracting States: **BE CH DE FR GB IT LI
NL SE**

(71) Applicant: **Scandinaviska Industrirobot System AB (Scan
Rob AB), Barnarpsvägen 16, S-562 00 Norrahammar (SE)**

(72) Inventor: **Richter, Sören, Mjölomstigen 22,
S-562 00 Norrahammar (SE)**
Inventor: **Hansson, Arne, c/o AB ARITMOS Stortorget 7,
S-251 14 Hälsingborg (SE)**

(74) Representative: **Österberg, Karl-Erik et al, DR. LUDWIG
BRANN PATENTBYRA AB Drottninggatan 7 Box 1344,
S-751 43 Uppsala (SE)**

(54) A device for a tyre retreading plant of autoclave type.

(57) A device for a tyre retreading plant is suggested, wherein
tyres prepared for the retreading operation and comprising a
carcass or casing should be provided with an applied tread band
by vulcanizing by the aid of heat and pressure. The tyre retread-
ing plant comprises an autoclave (1). The process heat and the
process pressure which are let out at the end of the vulcanizing
process are led via a conduit (3) into a preheating compartment
(2), wherein not yet vulcanized tyres (10) are stored, whereby a
preheating of said tyres (10) is achieved so that thereby the
completely vulcanizing process time and hence the energy
consumption can be reduced. The conduit (3) comprises fan
means (4), distribution nozzles for internal air circulation of the
heated process air, as well as a pressure reducing valve.

EP 0 055 237 A2

ACTORUM AG

1

A device for a tyre retreading plant of autoclave type

TECHNICAL FIELD

The present invention relates generally to a device for a tyre retreading plant, and the invention relates more in detail to an energy saving preheating device for a plant for retreading tyres.

BACKGROUND

During retreading of tyres for trucks and passenger cars the previously used but intact carcasses or casings are provided with a new tread band subsequent to removing the rests of the used tread band. This operation takes place at a tyre retreading plant, wherein the carcasses or casings are provided with a pre-vulcanized tread band which then is completely vulcanized in a autoclave, wherein a plurality of tyres in sets of usually eleven or twentytwo tyres are completely vulcanized at the same time. In the autoclave the carcasses or casings provided with the new tread band are heated at an elevated temperature and at higher pressure or vacuum, and the vulcanizing process takes place at said temperature and said pressure.

The above mentioned previously known technique suffers from among other things the drawback that the energy consumption is substantial because at the end of the vulcanizing process all the heated air is let out in the surrounding air without using the energy contents thereof, and then new tyres at room temperature (about 20$^{\circ}$C) are placed in the autoclave. Then a new heating period is started, wherein about 4 hours are spent just for a mere preheating at the autoclave process.

OBJECT OF THE INVENTION

The present invention is among other things aiming to eliminating the above mentioned drawback of the known technique. Said aim is achieved in accordance with the invention by the characterizing features that can be seen from the attached claims.

## DESCRIPTION OF THE FIGURES

The invention will now be described more in detail with reference to the attached drawings, wherein

FIGURE 1 in a schematical view seen from above illustrates a plant carried out in accordance with the invention seen from above, wherein an autoclave is used for the vulcanizing process, and

FIGURE 2 is illustrating a modified embodiment of the plant according to Figure 1.

## PREFERRED EMBODIMENTS

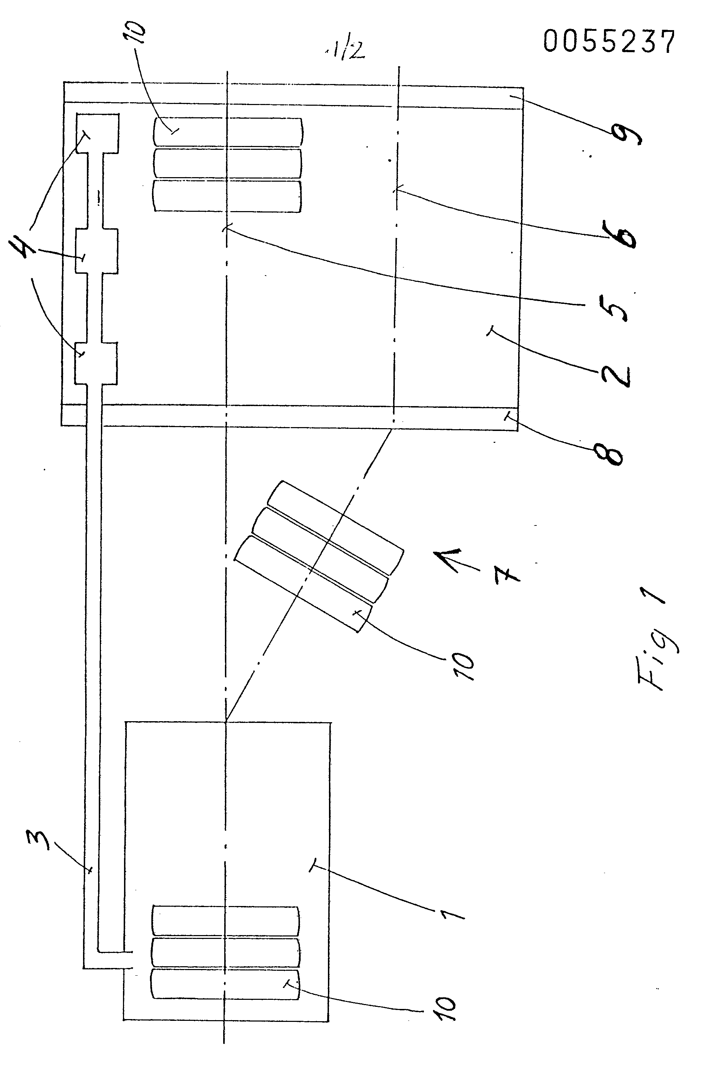

Fig. 1 illustrates how a plant according to the invention can be construed. The vulcanizing process as such takes place in an autoclave 1, wherein a set of tyres 10 is placed, said set comprising suitably either eleven or twentytwo tyres. In the autoclave the tyres are heated up to $95^{\circ}C$ at a pressure of about 600 kPa (6 atm), and then the tyres are removed from the autoclave for cooling down to room temperature. In accordance with the invention the heated tyres 10 are transferred into a preheating chamber 2, which is illustrated by the dotted lined transport track 5. In the preheating chamber 2 there is room for a further set of tyres, which will be located in the preheating chamber 2 at the same time as the already completely vulcanized tyres.

A conduit 3 leads from the autoclave 1 via a pressure reducing valve into the preheating chamber 2, wherein distribution nozzles 4 by the aid of an electrical fan provide an internal air circulation. In connection with emptying the autoclave when the completely vulcanized tyres are removed the conduit 3 transfers hot air at a high pressure to the distribution nozzles 4 and into the preheating chamber 2. When then the hot, completely vulcanized tyres 10 are introduced into the preheating chamber 2 the tyres of room temperature and located in the preheating chamber 2 will be heated partly by the supplied hot air and partly by the delivered heat from the hot, completely vulcanized tyres 10. Hence, a preheating of the new set of tyres takes place, and laboratory tests have shown that a preheating effect of up to about 55°C is possible to achieve for the tyres. The preheating operation occurs during the complete time period during which the vulcanizing operation takes place in the autoclave 1.

When finally the process cycle is terminated and the completely vulcanized tyres 10 are removed from the autoclave 1 the preheated tyres from the on Fig. 1 illustrated supply position are transferred via a second transport track 6 into the autoclave 1. Then, the hot completely vulcanized tyres 10 are transferred on the transport track 5 to the preheating chamber 2. A switch station 7 illustrated on the drawing is located between the preheating chamber 2 and the autoclave 1, which makes it possible fastly to remove completely vulcanized tyres 10 from the autoclave 1 at the same time as it is possible fastly to transfer preheated tyres from the preheating chamber 2 into the autoclave 1 for a new process.

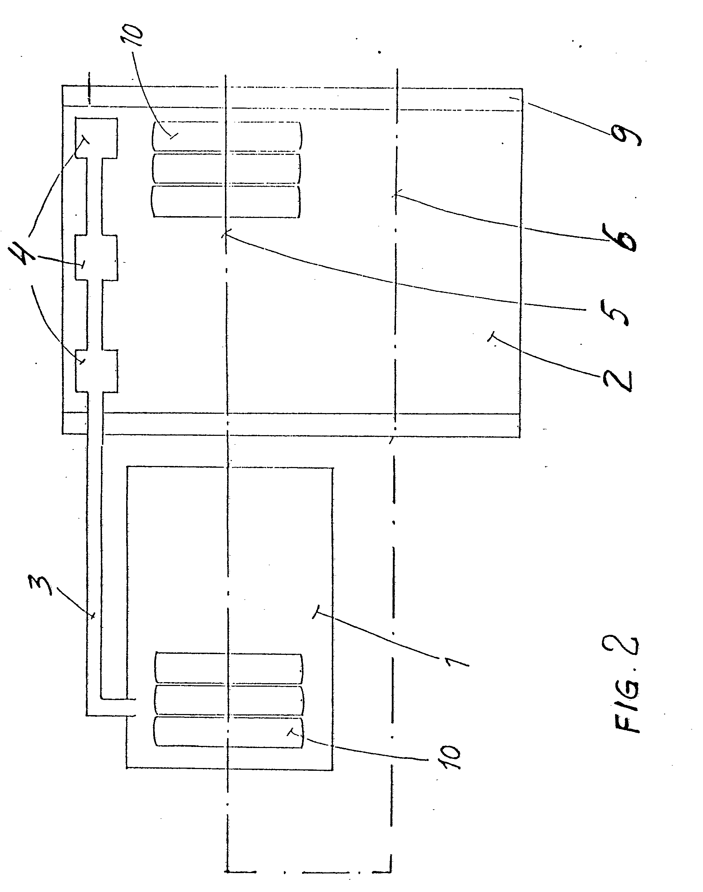

A further increase of the automatization rate can be obtained if the transport track 6 is provided as a loop according to Fig. 2 entering the autoclave 1 from the left in Fig. 2. By doing so the need for the switch station 7 is eliminated and the autoclave 1 and the preheating chamber 2 can be placed in direct connection to each other and thereby, also the need for a sluice is eliminated and the risk for heat leakage is minimized.

INDUSTRIAL USEFULNESS

The man within the art realizes that different modifications and variations can be carried out concerning the invention within the frame of the invention without leaving the basic idea thereof. Furthermore, it is realized that the preheating chamber suitably is construed by units having walls and sealings and being openable at the

0055237

two short sides thereof. In order to avoid heat losses there are suitably provided an air sluice. The plant is provided with a suitable automatic control for the transport tracks, the switch station and so forth, whereby the system will be automatical. Laboratory tests have shown that the vulcanizing time in the autoclave is reduced from about 4,5 hours to about 2 1/4 hours, that is the time for travel through the autoclave can be expected to be shortened into half.

CLAIMS

1.    A device in connection with a tyre retreading plant, wherein tyres prepared for the retreading operation and comprising a carcass or casing will be vulcanized together with a tread band applied thereupon, said vulcanizing operation will take place by the aid of heat and pressure, the tyre retreading plant comprising an autoclave (1), c h a r a c t e r i z e d by the fact that the process heat and process pressure to be let out at the end of the vulcanizing process is led via a conduit (3) to a preheating compartment (2), wherein not yet vulcanized tyres (10) are stored, thereby a preheating of said tyres (10) is achieved so that thereby the completely vulcanizing process time and hence the energy consumption can be reduced.

2.    The device according to claim 1, c h a r a c t e r i z e d by the fact that said conduit (3) comprises fan means (4) and distribution nozzles for internal air circulation of the heated process air.

3.    The device according to claim 2, c h a r a c t e r i z e d by the fact that a pressure reducing valve is provided in said conduit (3).

4.    The device according to claim 1, c h a r a c t e r i z e d by the fact that the autoclave (1) of the plant is connected to the preheating chamber (2) by a transport track (5) for completely vulcanized tyres (10), and that a transport track (6) from the preheating chamber (2) to the autoclave (1) via a switch station (7) is connected to the autoclave (1).

5.    The device according to claim 4, c h a r a c t e r i z e d by the fact that the preheating chamber (2) is constructed in units provided with isolated walls and roof members and being openable on the two short sides thereof.

6.    The device according to claim 5, c h a r a c t e r i z e d by an air sluice for preventing heat losses.

7.    The device according to one or more of claims 1-6, c h a r a c t e r i z e d by the fact that the preheating chamber (2) contains two sets of tyres (10), one set of which being a set of not yet vulcanized tyres while the other set comprises vulcanized tyres, and thereby the

0055237

process heat contained in the vulcanized tyres is delivered during a preheating period and transferred to the not yet vulcanized tyres (10) which are preheated thereby.

8. The device according to one or more of claims 1-7, c h a r a c - t e r i z e d by the fact that the transport track (6) for preheated tyres (10) extends into the autoclave (1) at one end thereof and that the transport track (5) transfers the completely vulcanized tyres out from the autoclave (1) at the other side thereof, and that the autoclave (1) and the preheating chamber (2) are provided in direct connection to each other.

Fig 1

1/2

0055237

FIG. 2